Europäisches Patentamt

European Patent Office

Office européen des brevets

(11) Numéro de publication: **0 124 453**
**A2**

## (12) DEMANDE DE BREVET EUROPEEN

(21) Numéro de dépôt: **84420069.1**

(51) Int. Cl.³: **B 60 R 13/04**

(22) Date de dépôt: **12.04.84**

(30) Priorité: **02.05.83 FR 8307552**

(43) Date de publication de la demande: **07.11.84**
**Bulletin 84/45**

(84) Etats contractants désignés: **AT BE CH DE GB IT LI LU NL SE**

(71) Demandeur: **FRANCAISE D'ACCESSOIRES AUTOMOBILES F2A Société Anonyme, Zone Industrielle de la Plaine, F-42240 Unieux Loire (FR)**

(72) Inventeur: **Brun, Michel, Résidence "Plein Soleil" 57, rue Pasteur, F-42240 Unieux (FR)**

(74) Mandataire: **Perrier, Jean-Pierre et al, Cabinet GERMAIN & MAUREAU 12 rue de la République, F-42000 St-Etienne (FR)**

(54) **Bandeau décoratif adaptable sur la partie arrière de tous véhicules automobiles.**

(57)    Ce bandeau est constitué par au moins deux et de préférence trois éléments décoratifs (2a-2b-3) aptes à être disposés longitudinalement dans le prolongement les uns des autres. Les éléments (2a-2b) munis d'une partie centrale translucide colorée (4) sont aptes à recevoir des instructions de personnalisation du véhicule tandis que l'élément (3) comporte des lignes de prédécoupes telles que longitudinales (9) et transversales (10) permettant d'ajuster sa longueur et de réaliser par sectionnement partiel des dégagements (12) nécessaires au passage des organes saillant de la carrosserie.

Ce dispositif est adaptable sur la partie arrière de tous les véhicules.

1

"Bandeau décoratif adaptable sur la partie arrière de tous véhicules automobiles".

L'invention est relative à un bandeau décoratif adaptable sur la partie arrière de tous véhicules automobiles.

Pour décorer la partie arrière d'un véhicule automobile, il est connu de fixer, aux lieu et place de la plaque d'immatriculation, une plaque colorée dont la face postérieure présente des reliefs tels que martelage ou pointes de diamant. Cette plaque comporte également, par impression, des indications caractérisant le véhicule, son propriétaire ou autre.

La mise en place de cette plaque exige de déplacer la plaque d'immatriculation vers le haut ou vers le bas et nécessite donc de procéder à des opérations de pose et de dépose qui ne sont pas à la portée de tout conducteur. Par ailleurs, en raison de la conformation particulière de chaque véhicule automobile, il est nécessaire de réaliser des plaques différentes appropriées, ce qui augmente le coût de fabrication.

Enfin, en raison de la disposition de la plaque décorative dans le logement prévu pour la plaque d'immatriculation, l'effet décoratif est limité en longueur.

La présente invention a pour but de fournir un bandeau décoratif qui, universel, c'est à dire apte à être disposé au-dessus ou au-dessous des feux arrières de tout véhicule, ait une longueur adaptable à toutes les carrosseries et puisse être posé rapidement sans outillage.

A cet effet, ce bandeau est constitué par au moins deux éléments décoratifs aptes à être disposés longitudinalement dans le prolongement l'un de l'autre et à recevoir l'un ou l'autre des inscriptions de personnalisation du véhicule, éléments dont l'un comporte des lignes de prédécoupes longitudinales, transversales ou autres permettant, respectivement, d'ajuster sa longueur et de réaliser, par sectionnement partiel, les dégagements nécessaires au passage des organes saillant de la carrosserie.

Grâce à cet agencement, ce bandeau décoratif peut être disposé sur toute la largeur de la partie arrière du véhicule et est adaptable à la structure de ce dernier par ajustement d'un seul élément tant en longueur que dans la forme des dégagements nécessaires au passage des saillies ménagées dans la carrosserie, tels que boutons d'ouverture ou autres.

Dans une forme de réalisation de l'invention, le bandeau est constitué par deux éléments latéraux composés chacun d'un corps monolithique avec partie centrale translucide colorée entourée par un cadre décoratif opaque, et par un élément central muni de lignes de prédécoupes dont les extrémités sont coiffées ou coiffent les extrémités intérieures des éléments latéraux.

Avantageusement, chaque élément latéral est associé, sur au moins une partie de sa partie translucide, à un film postérieur qui, constituant fond et portant des inscriptions de personnalisation, est adhésif côté carrosserie.

Ainsi, le film portant les inscriptions est protégé des intempéries et des ruissellements. De plus, l'indépendance des éléments et des inscriptions permet d'adapter les inscriptions aux désirs du conducteur.

L'invention sera mieux comprise à l'aide de la description qui suit en référence aux dessins schématiques annexés représentant, à titre d'exemple non limitatif, une forme d'exécution d'un bandeau composé de trois éléments.

Figures 1 et 2 sont des vues de face en élévation de ce bandeau le montrant dans des configurations différentes par ajustement des longueurs de sa partie centrale ;

Figure 3 est une vue en coupe longitudinale à échelle agrandie suivant 3-3 de figure 1 ;

Figure 4 est une vue en coupe transversale, à échelle encore plus agrandie suivant 4-4 de figure 1 ;

Figure 5 est une vue partielle de face en élévation montrant, à échelle agrandie, la partie latérale de l'élément central du bandeau.

Ce bandeau décoratif est constitué par deux éléments latéraux (2a-2b) et par un élément central (3).

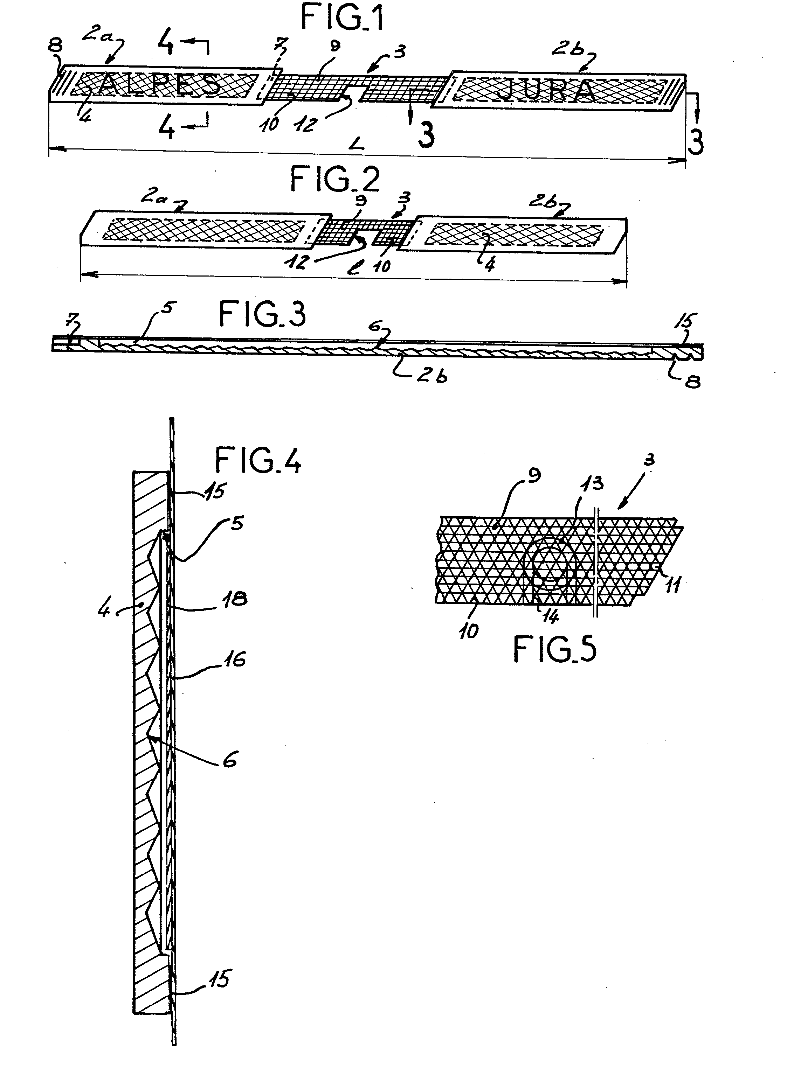

Chacun des éléments latéraux (2a-2b) est réalisé en matière synthétique et comporte une partie centrale translucide (4) délimitée par un encadrement opaque. Cette partie translucide s'étend sur tout ou partie de la longueur de l'élément latéral. Dans cette forme d'exécution, elle est associée, sur tout ou partie de sa surface, à un logement arrière (5). La face arrière de cette partie (4) est martelée

3

ou formée par une succession de pointes de diamant (6), comme montré à la figure 4. Sur son bord intérieur, chaque élément latéral (2a) ou (2b) est également muni d'un logement borgne (7) débouchant sur l'arrière et de l'extrémité longitudinale de l'élément.

La forme des extrémités de ces éléments dépend de l'aspect décoratif recherché, de même d'ailleurs que les différents motifs (8) formés sur sa face avant par des saillies, des rainures ou autres.

L'élément central (3) est composé d'une plaque en matière synthétique, de coloris et/ou d'aspect identique ou différent de celui des éléments latéraux. Dans la forme d'exécution représentée, cette plaque est opaque. Elle comporte, débouchant de sa face avant, une pluralité de lignes de prédécoupes longitudinales (9), parallèles et sécantant des lignes de prédécoupes transversales parallèles (10). Les lignes de prédécoupe (10) peuvent être verticales ou inclinées par rapport à la verticale, comme montré figures 1 et 2, et même se croiser, comme montré figure 5.

Les lignes de prédécoupes transversales (10) permettent, en sectionnant au moins l'une des extrémités de l'élément central (3), d'ajuster sa longueur de manière que la longueur totale du bandeau puisse prendre une dimension (L) ou (1), comme montré aux figures 1 et 2, ou toute autre valeur différente, en fonction des besoins de la décoration ou de la largeur du capot, du hayon arrière, ou de la carrosserie du véhicule. Les lignes de prédécoupes longitudinales (9) permettent, en combinaison avec celles transversales (10), de réaliser dans l'élément central (3) des dégagements, tel que celui représenté en (12) aux figures 1 et 2, dégagements permettant, par exemple, le passage du bouton poussoir d'ouverture du coffre.

Lorsque l'élément central (3) a la même largeur que les éléments latéraux (2a-2b), les lignes de prédécoupe (9-10) permettent également, par sectionnement partiel des bords supérieurs et inférieurs des extrémités de l'élément central (3), de donner à ces extrémités la forme de tenons aptes à pénétrer dans les logements (7), comme montré (en 11) figure 5.

Cette figure 5 montre également que, dans une forme d'exécution, pour faciliter le passage d'un bouton-poussoir d'ouverture de capot, l'élément central (3) comporte, dans sa partie centrale, des lignes de prédécoupes (13) circulaires, semi-circulaires ou autres, se raccordant avec des lignes de prédécoupes verticales (14) permettant de réaliser des dégagements circulaires ou oblongs. Les lignes de prédécoupes (9 et 10) et, éventuellement, celles (13 et 14), sont suffisamment profondes pour permettre le sectionnement de la partie correspondante de l'élément (3) sans qu'il soit nécessaire d'avoir recours à un outil autre qu'un instrument tranchant.

Chacun des éléments du bandeau comporte, sur sa face postérieure, des bandes adhésives (15), de type double face, permettant de le fixer par collage sur le véhicule (16). Grâce à cet agencement, la mise en place du bandeau décoratif s'effectue très aisément et très rapidement, quelles que soient les protubérances et organes formant saillies du véhicule.

Lorsque ce bandeau est posé sur le véhicule, et grâce aux logements (7) des éléments latéraux (2a et 2b) coiffant les extrémités de l'élément central (3), il forme un ensemble continu parfaisant l'aspect décoratif général.

Lors de la pose sur la carrosserie, chacun des éléments latéraux coiffe un film (18) déjà posé sur la carrosserie par sa surface postérieure adhésive. Ce film se loge dans tout ou partie du logement (5). Il permet, par les inscriptions qu'il porte sur sa face antérieure, de personnaliser le véhicule. A cette fin, il comporte soit des motifs imprimés d'origine, soit un fond uni sur lequel des lettres rapportées permettent d'inscrire tout autre indication lisible à travers la partie translucide (4) de l'élément latéral (2a ou 2b) correspondant.

La personnalisation peut aussi être assurée par des éléments adhésifs rapportés sur la face antérieure du bandeau décoratif.

Il ressort de ce qui précède que ce bandeau décoratif est universel, tant en ce qui concerne le véhicule sur lequel il peut être apposé qu'en ce qui concerne les mentions de personnalisation.

Il est évident que l'invention n'est pas limitée à la seule forme d'exécution du bandeau qui a été décrite ci-dessus mais embrasse au contraire tout bandeau décoratif comportant au moins un élément fractionnable avec lignes de prédécoupes permettant d'ajuster la longueur de l'ensemble et de l'adapter aux saillies du véhicule et au moins un élément permettant la personnalisation de cet ensemble, que ces éléments soient bout à bout ou se chevauchent avec ou sans emboitement. C'est ainsi que l'on pourrait parvenir au même résultat en

5

ménageant les logements (7) aux extrémités de l'élément central (3)
et en disposant les lignes de prédécoupes sur les éléments latéraux
avec changement ou non des effets décoratifs.

6

REVENDICATIONS

1. Bandeau décoratif adaptable sur la partie arrière de toute automobile caractérisé en ce qu'il est constitué par au moins deux éléments décoratifs (2-3), aptes à être disposés longitudinalement dans le prolongement l'un de l'autre et à recevoir l'une ou l'autre des inscriptions de personnalisation du véhicule, éléments, dont l'un comporte des lignes de prédécoupes longitudinales (9), transversales (10), ou autres (13-14), permettant, respectivement, d'ajuster sa longueur et de réaliser, par sectionnement partiel, les dégagements (12) nécessaires au passage des organes saillant de la carrosserie.

2. Bandeau selon la revendication 1, caractérisé en ce qu'il est constitué par deux éléments latéraux (2a-2b) composés, chacun, d'un corps monolithique avec partie centrale translucide colorée (4) entourée par un cadre décoratif opaque, et par un élément central (3), muni de lignes de prédécoupes (9-10), dont les extrémités sont coiffées par les extrémités intérieures des éléments latéraux.

3. Bandeau selon la revendication 1 caractérisé en ce qu'il est constitué par deux éléments latéraux (2a-2b) composés, chacun, d'un corps monolithique avec partie centrale translucide colorée (4) entourée par un cadre décoratif opaque, et par un élément central (3), muni de lignes de prédécoupes, dont les extrémités coiffent les extrémités intérieures des éléments latéraux.

4. Bandeau selon l'une quelconque des revendications 2 et 3 caractérisé en ce que chaque élément latéral (2a-2b) est associé sur au moins une partie de sa partie translucide (4) à un film (18) postérieur qui, constituant fond et portant des inscriptions de personnalisation, est adhésif côté carrosserie.

5. Bandeau selon la revendication 1 et l'une quelconque des revendications 2 à 4 caractérisé en ce que chacun de ses éléments est muni, sur sa partie postérieure de bandes adhésives double face (15) pour sa fixation sur le véhicule.

6. Bandeau selon l'ensemble des revendications 1 et 2 et l'une quelconque des revendications 3 et 4 caractérisé en ce que chaque élément latéral (2a-2b) comporte, à son extrémité libre intérieure, un logement apte à coiffer l'extrémité de plus petite épaisseur de l'élément central (3).

7. Bandeau selon l'ensemble des revendications 1 et 3 et l'une quelconque des revendications 4 et 5 caractérisé en ce que l'élément central (3) comporte, à ses extrémités, des logements aptes à coiffer les extrémités des éléments latéraux.

00124453

FIG.1

FIG.2

FIG.3

FIG.4

FIG.5